Europäisches Patentamt

European Patent Office

Office européen des brevets

(19)

(11) Publication number: **0 238 136 B1**

# EUROPEAN PATENT SPECIFICATION

(12)

(45) Date of publication of patent specification: **21.08.91**    (51) Int. Cl.⁵: **C10G  21/00, C10G  21/28**

(21) Application number: **87200448.6**

(22) Date of filing: **10.03.87**

(54) **Extraction process.**

(30) Priority: **20.03.86 GB 8606902**

(43) Date of publication of application:
**23.09.87 Bulletin  87/39**

(45) Publication of the grant of the patent:
**21.08.91 Bulletin  91/34**

(84) Designated Contracting States:
**BE CH DE ES FR GB IT LI**

(56) References cited:
**EP-A- 0 033 512**
**GB-A- 1 528 798**
**GB-A- 2 012 809**
**US-A- 4 519 901**

(73) Proprietor: **SHELL INTERNATIONALE RE-**
**SEARCH MAATSCHAPPIJ B.V.**
**Carel van Bylandtlaan 30**
**NL-2596 HR Den Haag(NL)**

(72) Inventor: **Cornelissen, Anton Eduard**
**Badhuisweg 3**
**NL-1031 CM Amsterdam(NL)**

(74) Representative: **Aalbers, Onno et al**
**P.O. Box 302**
**NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to an extraction process.

It is known to contact a feed with an extractant in an extraction zone, optionally heating the upper part thereof, forming reflux and remove products from both the lower- and the upper-part thereof.

Such an extraction process has a number of drawbacks i.e. the amount of reflux generated by heating the upper part of the extraction zone increases in downward direction as a result of which the reflux flow rate is less than optimal in most of said upper part of the extraction zone; consequently the mass exchange between the reflux stream (having a relatively high density) and the upwardly flowing extractant stream (having a relatively low density) is not optimal. Moreover, the reflux thus formed may be present as very small droplets, entrainment of which by the extractant stream appears to hamper the separation efficiency of such a process.

Surprisingly it has now been found that the aforementioned drawbacks can be overcome by removing fluid from the upper part of the extraction zone, heating at least part of said fluid, separating heated fluid in a separation zone into fluids of different density and introducing at least part of a fluid of higher density into the upper part of the extraction zone.

There is also known from U.K. published patent application No. 2,012,809, a simultaneous deasphalting and extracting process in which a mineral oil feedstock is contacted with a solvent comprising both a light hydrocarbon such as propane and N-methyl-2-pyrrolidone (NMP) in order to facilitate the separation of lower VI from higher VI constituents. In order to make the process economically viable the NMP is separated for recycle by first flashing off the light hydrocarbon solvent and then cooling the resulting hydrocarbon solvent-reduced raffinate to separate the oil rich light phase from the NMP rich heavy phase which is then recycled to the NMP input line.

An extraction process which comprises the following steps:
contacting a heavy hydrocarbon oil feed with an alkane(s) comprising extractant in an extraction zone having an upper rectifying zone and a lower stripping zone by introducing the heavy hydrocarbon oil into the upper part of the stripping zone and introducing the alkane(s) comprising extractant into the lower part of the stripping zone, or by introducing a mixture of feed and extractant into the lower part of the extraction zone,
removing a product from a lower part of the stripping zone,
heating at least part of a fluid comprising extracted product and extractant after it has been removed from an upper part of the rectifying zone,
separating heated fluid in a separation zone into a first fluid of lower density comprising extractant and extracted product, and a second fluid of higher density comprising extracted product,
at least part of said fluid of higher density being introduced as reflux into the upper part of the rectifying zone, separately from said feed, characterised in that no further extractant is used.

In the process according to the invention the fluid of higher density than the fluid(s) of lower density (comprising a substantial amount of extractant) removed from the separation zone, acts as reflux stream when introduced into the upper part of the extraction zone (step (v)). This reflux stream, which is produced outside the extraction zone, is very effective because the mass flow rate thereof is optimal right from the point of introduction (preferably near the top of the extraction zone) downward; consequently the mass exchange between the (extractant-lean) reflux stream of higher density and an (extractant-rich) upwardly flowing stream of lower density will be much improved in the upper part of the extraction zone which serves as rectifying zone, compared with an extraction process in which a reflux stream is internally generated.

Moreover, with the present process the reflux stream can be distributed in the rectifying zone in the form of droplets having a controlled size, thus avoiding entrainment thereof with the upwardly flowing stream in said rectifying zone.

Furthermore, by employing a separation zone in step (iv) located separately from the extraction zone, entrainment of the (reflux) fluid of higher density with the removed fluid(s) of lower density will be substantially prevented.

Preferably, at least part of the extractant (which comprises one or more selective solvents for particular components of the feed) is introduced as a stream into the lower part of the extraction zone wherein it will flow upwardly and countercurrently with the feed- and reflux streams, thus attaining optimal mass- and heat-exchange conditions. Optionally, part or all of the extractant is used for prediluting of the feed in particular when an asphalt-containing heavy hydrocarbon oil feed is to be deasphalted by means of the process according to the invention.

The process according to the invention is particularly suited for feed/extractant combinations for which the solubility of the dissolved component(s) in the extractant is reduced at increasing temperature; such combinations are found in super-critical extraction processes (e.g. employing carbon dioxide as extractant) and in deasphalting a heavy hydrocarbon oil feed such as a short residue obtained by distillation at reduced pressure of a long residue (which in turn is obtained by distillation of a mineral- or synthetic crude oil). Preferably an alkane(s)-comprising extractant is employed which most preferably comprises propane and/or butane and/or pentane depending on the intended use of the deasphalted product e.g. as feed for a lubricating oil plant in which case a propane-comprising extractant is preferred or as feed for a catalytic cracking operation (employing a butane- or pentane- comprising extractant).

The present process can be carried out within a wide range of temperatures (e.g. 10-300 °C) and pressures (e.g. 2-100 bar abs.); preferably, it is carried out at temperatures form 50-150°C and pressures from 10-60 bar abs. In a particularly preferred embodiment the process is carried out at such an elevated temperature and pressure that the fluids present in the extraction zone are maintained just below the critical conditions; at such conditions an increase in the temperature of the fluid removed from an upper part of the extraction zone (step (iii)) will lead to the formation of two distinct fluids which can be easily separated due to their different densities.

Heating and separating of the fluid removed from an upper part of the extraction zone (steps (iii) and (iv)) can be carried out in a single zone, if desired. However, it is preferred to carry out step (iii) and (iv) of the process according to the invention in separate (preferably indirect) heating and separation zones in order to attain optimal separation of said fluid into a reflux- and at least one product stream.

In a particularly preferred embodiment of the present process at least part of the (reflux) fluid of higher density obtained in step (iv) is cooled before being introduced into the upper part of the extraction zone in order to be able to regulate the temperature in the extraction zone independently from the temperature in the separation zone which is determined by heating step (iii) of the process, thus attaining optimal separation of the various components present in the feed. Moreover, the aforementioned droplet size of the reflux stream can be regulated by the design of the distributor therefor.

If desired, substantially all of the product (e.g. deasphalted oil) contained in the fluid removed from the upper part of the extraction zone can be separated off from the extractant by appropriate heating and cooling of said streams, thus providing an extractant stream which can be at least partly recycled to the extraction zone. In this case part of the product obtained is employed as reflux (step (v)).

Without loss of efficiency, the part of the extraction zone below the feed inlet (which serves as a stripping zone) may be replaced, in particular in deasphalting processes, by a mixing/-settling zone, which is advantageous both from an operational and from a capital expenditure point of view.

The process of the invention can be carried out using an extraction apparatus which comprises a housing having feed- and extractant-inlet means, first product outlet means in its lower end part and in its upper end part fluid outlet means communicating via heat exchange means with a settling vessel having in its upper section second product outlet means and in its lower section reflux outlet means communicating with the upper end part of the housing separately from said feed-and extractant-inlet means.

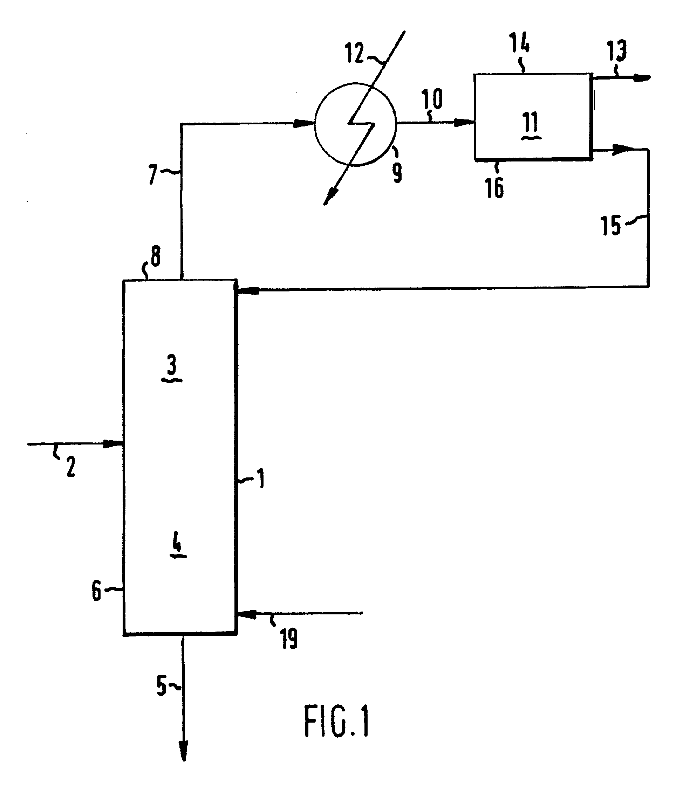

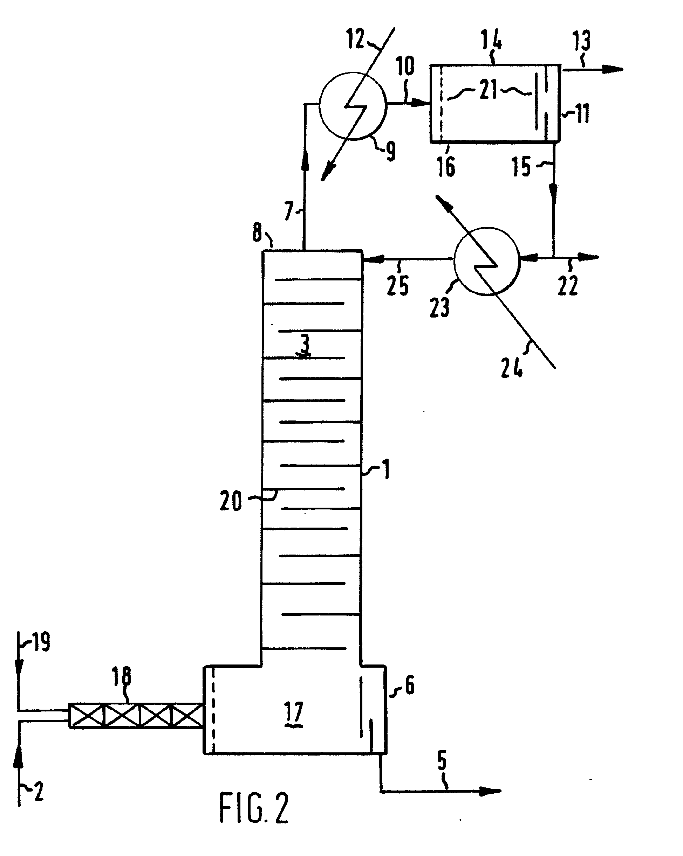

Preferred embodiments of the apparatus for carrying out the process of the invention are described hereinafter using Figures 1 and 2 in which reference numerals relating to corresponding parts are the same.

In Figure 1 an apparatus is schematically depicted in an elementary from.

Figure 2 represents a particularly preferred embodiment of the apparatus.

The apparatus shown in Figure 1 comprises a housing (1), feed inlet means (2) above which the rectifying section (3) and below which the stripping section (4) are situated in the housing. First product (e.g. asphalt) outlet means (5) are arranged in the lower end part (6) and fluid outlet means (7) are arranged in the upper end part (8) of the housing. Fluid outlet means (7) are in communication with settling vessel (11) via indirect (e.g. tubular) heat exchanger (9) and line (10). A heating medium such as steam is led via line (12) through heat exchanger (9). Settling vessel (11) is provided with second product (e.g. a relatively low density mixture of deasphalted oil and solvent) outlet means (13) in its upper section (14) and reflux outlet means (15) in its lower section (16). Reflux outlet means (15) are connected to the upper end part (8) of housing (1), whereas extractant inlet means (19) are connected to the lower end part (6) thereof.

In Figure 2 a particularly preferred embodiment of the apparatus is depicted which in addition to the elements described in relation with Figure 1 comprises a settling section (17) in housing (1) which is in communication with mixing means (18) (e.g. turbulence coils or, preferably, an in-line mixer). Feed is introduced through line (2) and extractant through line (19) into mixing means (18) wherein both fluids are thoroughly mixed with each other.

Preferably, the housing (1) comprises a column provided with mass transfer means (20) (e.g. baffles as shown in Figure 2 or perforated trays or packings in the form of rings or other bodies known in the art). Settling vessel (11) may be provided with internals (21) such as parallel plates or other means known in the art to enhance settling. Third product (e.g. heavy hydrocarbon oil) outlet means (22) are in communication with the reflux outlet means (15) which are also in communication with heat exchanger (23) through which a cooling medium (e.g. water) is led via line (24). Finally, cooled reflux fluid is introduced through line (25) into the upper end part (8) of housing (1) via reflux distribution means (not depicted in the Figures).

The invention is illustrated by means of the following Examples.

EXAMPLE 1

A feed stream consisting of a 1000 ton/day of asphalt-containing heavy hydrocarbon oil is prediluted with 500 ton/day of propane to form a mixture which enters through feed inlet means (2) the extraction apparatus as depicted in Figure 1 operating at a temperature of 70 °C and a pressure of 40 bar abs. inside the housing (1). 3500 ton/day of propane extractant is introduced through extractant inlet means (19). The fluid leaving upper end part (8) of housing (1) is heated to 85 °C in heat exchanger (9) and subsequently passed to settling vessel (11) wherein 450 ton/day of a fluid having a relatively high density containing heavy deasphalted oil and dissolved propane is separated off and recycled through line (15) as reflux into the rectifying section (3) of housing (1). The product fluid obtained via outlet means (13) from settling vessel (11) contains 250 ton/day of substantially asphalt-free relatively light deasphalted oil dissolved in 3500 ton/day of propane which is further separated in equipment not depicted in Figure 1. 750 ton/day of asphalt and heavy deasphalted oil is removed together with 500 ton/day of propane through product outlet means (5).

EXAMPLE 2

A feed stream consisting of 1000 ton/day of asphalt-containing heavy hydrocarbon oil is fed together with 2000 ton/day of an extractant mixture containing normal- and iso-butane into mixing means (18) as depicted in Figure 2.

Mixing means (18), settling section (17) and rectifying section (3) are (substantially isothermally) operated at 135 °C and 40 bar abs. Via outlet means (5) 600 ton/day of asphalt and 400 ton/day of butanes are removed, whereas a mixture of 1700 ton/day of butanes and 550 ton/day of deasphalted oil is removed via fluid outlet means (7). Said mixture is heated to a temperature of 150 °C in heat exchanger (9) and subsequently separated in settling vessel (11) into 400 ton/day of a light deasphalted oil product, which is removed via product outlet means (13) together with 1600 ton/day of butanes, and 250 ton/day of a mixture of undesired relatively heavy deasphalted oil and butanes which is cooled to a temperature of 135 °C in heat exchanger (23) and subsequently recycled as reflux into rectifying section (3).

Claims

1. An extraction process which comprises the following steps:

(i) contacting a heavy hydrocarbon oil feed with an alkane(s) comprising extractant in an extraction zone having an upper rectifying zone and a lower stripping zone by introducing the heavy hydrocarbon oil into the upper part of the stripping zone and introducing the alkane(s) comprising extractant into the lower part of the stripping zone, or by introducing a mixture of feed and extractant into the lower part of the extraction zone,

(ii) removing a product from a lower part of the stripping zone,

(iii) heating at least part of a fluid comprising extracted product and extractant after it has been removed from an upper part of the rectifying zone,

(iv) separating heated fluid in a separation zone into a first fluid of lower density comprising extractant and extracted product, and a second fluid of higher density comprising extracted product,

at least part of said fluid of higher density being introduced as reflux into the upper part of the rectifying zone, separately from said feed, characterised in that no further extractant is used.

2. Process according to claim 1 wherein a heavy hydrocarbon oil feed is deasphalted.

3. Process according to claim 1 or 2 wherein an alkane(s)-comprising extractant, most preferably comprising propane and/or butane and/or pentane, is employed.

4. Process according to any one of the preceding claims wherein the feed and the extractant are mixed and the resulting mixture is introduced into the lower part of the extraction zone comprising a settling zone from which a product is removed (step (ii)).

5. Process according to any one of the preceding claims wherein at least part of the fluid of higher density obtained in step (iv) is cooled before being introduced into the upper part of the extraction zone.

6. Process according to any one of the preceding claims which is carried out at such an elevated temperature and pressure that the fluids present in the extraction zone are maintained at substantially critical conditions.

**Revendications**

1. Procédé d'extraction qui comprend les étapes suivantes :

(i) mettre en contact une charge d'huile hydrocarbonée lourde avec un ou des alcane(s) comprenant un agent d'extraction dans une zone d'extraction possédant une zone de rectification supérieure et une zone d'épuisement inférieure, en introduisant l'huile hydrocarbonée lourde dans la partie supérieure de la zone d'épuisement et en introduisant le ou les alcane(s) comprenant un agent d'extraction dans la partie inférieure de la zone d'épuisement, ou en introduisant un mélange de charge et d'agent d'extraction dans la partie inférieure de la zone d'extraction,

(ii) éliminer un produit de la partie inférieure de la zone d'épuisement,

(iii) chauffer au moins une partie d'un fluide comprenant un produit extrait et un agent d'extraction après l'avoir retiré de la partie supérieure de la zone de rectification,

(iv) séparer le fluide chauffé dans une zone de séparation en un premier fluide de densité plus faible comprenant l'agent d'extraction et le produit extrait, et en un second fluide de densité plus élevée comprenant le produit extrait,

au moins une partie dudit fluide de densité plus élevée étant introduit sous forme d'un reflux dans la partie supérieure de la zone de rectification, séparément de ladite charge, caractérisé en ce que l'on n'utilise pas d'autre agent d'extraction.

2. Procédé selon la revendication 1, dans lequel une charge d'huile hydrocarbonée lourde est désasphaltée.

3. Procédé selon la revendication 1 ou 2, dans lequel on emploie un agent d'extraction comprenant un ou des alcane(s), de préférence comprenant du propane et/ou du butane et/ou du pentane.

4. Procédé selon l'une quelconque des revendications précédentes, dans lequel la charge et l'agent d'extraction sont mélangés et le mélange résultant est introduit dans la partie inférieure de la zone d'extraction comprenant une zone de décantation de laquelle un produit est retiré (étape (ii)).

5. Procédé selon l'une quelconque des revendications précédentes, dans lequel au moins une partie du fluide de densité plus élevée obtenu dans l'étape (iv) est refroidie avant d'être introduite dans la partie supérieure de la zone d'extraction.

6. Procédé selon l'une quelconque des revendications précédentes, qui est mis en oeuvre à une température et sous une pression élevées telles que les fluides présents dans la zone d'extraction sont maintenus dans des conditions essentiellement critiques.

**Patentansprüche**

1. Ein Extraktionsverfahren, welches die folgenden Verfahrensstufen umfaßt:

(i) Kontaktieren eines schweren Kohlenwasserstoffölausgangsmaterials mit einem (ein) Alkan(e) umfassenden Extraktionsmittel in einer Extraktionszone mit einer oberen Rektifizierzone und einer unteren Abstreifzone durch Einführen des schweren Kohlenwasserstofföls in den oberen Teil der Abstreifzone und Einführen des die Alkane(das Alkan) umfassenden Extraktionsmittels in den unteren Teil der Abstreifzone oder durch Einführen einer Mischung des Ausgangsmaterials und des Extraktionsmittels in den unteren Teil der Extraktionszone,

(ii) Entfernen eines Produkts aus dem unteren Teil der Abstreifzone,

(iii) Erwärmen mindestens eines Teils eines Fluids, umfassend extrahiertes Produkt und Extraktionsmittel , nachdem es aus einem oberen Teil der Rektifizierzone entfernt worden ist,

(iv) Auftrennen des erhitzten Fluids in einer Trennzone in ein erstes Fluid mit geringer Dichte, umfassend Extraktionsmittel und extrahiertes Produkt, und in ein zweites Fluid höherer Dichte, umfassend extrahiertes Produkt,

wobei mindestens ein Teil des genannten Fluids höherer Dichte als Rückfluß in den oberen Teil der Rektifizierzone getrennt von dem genannten Ausgangsmaterial eingespeist wird, **dadurch gekennzeichnet,** daß kein weiteres Extraktionsmittel eingesetzt wird.

2. Verfahren nach Anspruch 1, in welchem ein schweres Kohlenwasserstoffölausgangsmaterial entasphaltiert wird.

3. Verfahren nach Anspruch 1 oder 2, in welchem ein (ein)Alkan(e) umfassendes Extraktionsmittel, vorzugsweise Propan und/oder Butan und/oder Pentan umfassend, eingesetzt wird.

4. Verfahren nach einen der vorstehenden Ansprüche, in welchem das Ausgangsmaterial und das Extraktionsmittel gemischt werden und die resultierende Mischung in den unteren Teil der Extraktionszone, umfassend eine Absetzzone , aus der ein Produkt entfernt wird (Verfahrensstufe (ii)), eingespeist wird.

5. Verfahren nach einem der vorstehenden Ansprüche, in welchem mindestens ein Teil des Fluids höherer Dichte, das in Verfahrensstufe (iv) erhalten worden ist, gekühlt wird, bevor es in den oberen Teil der Extraktionszone eingespeist wird.

6. Verfahren nach einem der vorstehenden Ansprüche, welches bei derart erhöhter Temperatur und erhöhtem Druck durchgeführt wird, daß die Fluide, die in der Extraktionszone vorhanden sind, unter im wesentlichen kritischen Bedingungen gehalten werden.

FIG.1

FIG. 2